# FASCICULE DE BREVET EUROPEEN

(11) **EP 1 098 109 B1**
(45) Date de publication et mention de la délivrance du brevet: **22.03.2006**
(21) Numéro de dépôt: 00403059.9
(22) Date de dépôt: 03.11.2000
(51) Int. Cl.: F16F 9/34, B60G 13/08, F16F 9/46

(54) **Agencement d'amortissement des mouvements d'une masse par rapport à un support**
Dämpfungseinrichtung für die Bewegungen einer Masse in Bezug auf ihrem Träger
Damping device for the movement of a mass in respect to a support

(30) Priorité: 05.11.1999 FR 9913904
(43) Date de publication de la demande: 09.05.2001
(73) Titulaire: Peugeot Citroen Automobiles SA, 92200 Neuilly sur Seine (FR)
(72) Inventeur: Abadie, Vincent, 92700 Colombes (FR)
(74) Mandataire: Berger, Helmut

(56) Documents cités:
- WO-A-89/09891
- FR-A- 2 660 386

## Description

L'invention concerne un agencement d'amortissement des mouvements d'une masse par rapport à un support selon le préambule de la revendication 1

Un agencement d'amortissement de ce type est connu par le document WO-A-8909891.

Cet agencement connu présente l'inconvénient majeur d'avoir une structure complexe, notamment grâce au dispositif de clapet utilisé.

La présente invention a pour but de proposer un agencement d'amortissement qui pallie cet inconvénient de l'état de la technique.

Pour atteindre ce but, l'agencement d'amortissement selon l'invention comporte les caractéristiques énoncées dans la partie caractérisante de la revendication 1.

Selon une autre caractéristique de l'invention, le carter comporte une chambre inférieure délimitée entre le piston et le module de laminage et une chambre supérieure délimitée au-dessus du piston, la chambre inférieure est susceptible de communiquer avec la chambre supérieure par l'intermédiaire d'un dispositif de clapet prévu dans le piston de sorte que, lors des phases de détente et de compression, le fluide hydraulique s'écoule de la chambre supérieure vers le module de laminage.

Selon une autre caractéristique, la partie de la tige qui porte le piston est creuse, l'espace interne de cette partie de tige communique avec la chambre supérieure et un tube est disposé coaxialement à l'intérieur de partie de tige, ce tube étant ouvert à son extrémité supérieure et ayant son autre extrémité reliée à l'entrée du module de laminage.

Selon encore une autre caractéristique de l'invention, l'entrée du module de laminage communique avec une chambre de compensation dans laquelle parvient le fluide après avoir été laminé dans le module et la chambre de compensation est en communication avec la chambre inférieure précitée par l'intermédiaire de moyens de clapet.

Selon encore une autre caractéristique de l'invention, le module de laminage comporte une première voie d'écoulement de fluide dans laquelle est disposé le diaphragme de laminage précité qui est à débit variable et une voie de dérivation qui débouchent toutes les deux dans la chambre de compensation.

Selon encore une autre caractéristique de l'invention, le module de laminage comporte un tiroir mobile dans un corps sous l'effet d'une pression différentielle de liquide déterminée par le diaphragme précité, la voie de dérivation étant ouverte plus ou moins en fonction du déplacement du tiroir.

Selon encore une autre caractéristique de l'invention, la communication entre la chambre de compensation et la chambre inférieure du carter est formée par au moins un canal pratiqué dans le corps du module de laminage et dont l'ouverture dans la chambre inférieure est susceptible d'être ouverte ou fermée par un clapet.

Selon encore une autre caractéristique de l'invention, le piston comporte au moins un orifice axial et un clapet disposé sur l'ouverture de l'orifice dans la chambre supérieure.

Selon une encore autre caractéristique de l'invention, la force d'amortissement produite par le module de laminage est susceptible d'être calculée suivant une loi CRONE, selon laquelle l'effort est soit nul, soit proportionnel à une dérivée non entière du déplacement relatif entre la caisse et la roue d'un véhicule automobile lorsque l'agencement d'amortissement est utilisé pour l'amortissement d'une suspension de véhicule automobile.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention.

La figure 1 est une vue en coupe axiale d'un agencement d'amortissement selon la présente invention.

La figure 2 est une vue à plus grande échelle de la partie inférieure II de la figure 1.

La figure 3 est un diagramme illustrant la plage de fonctionnement de l'agencement d'amortissement selon l'invention.

La figure 4 est un schéma-bloc de l'application de l'agencement d'amortissement selon la figure 1 à une suspension d'une roue de véhicule automobile.

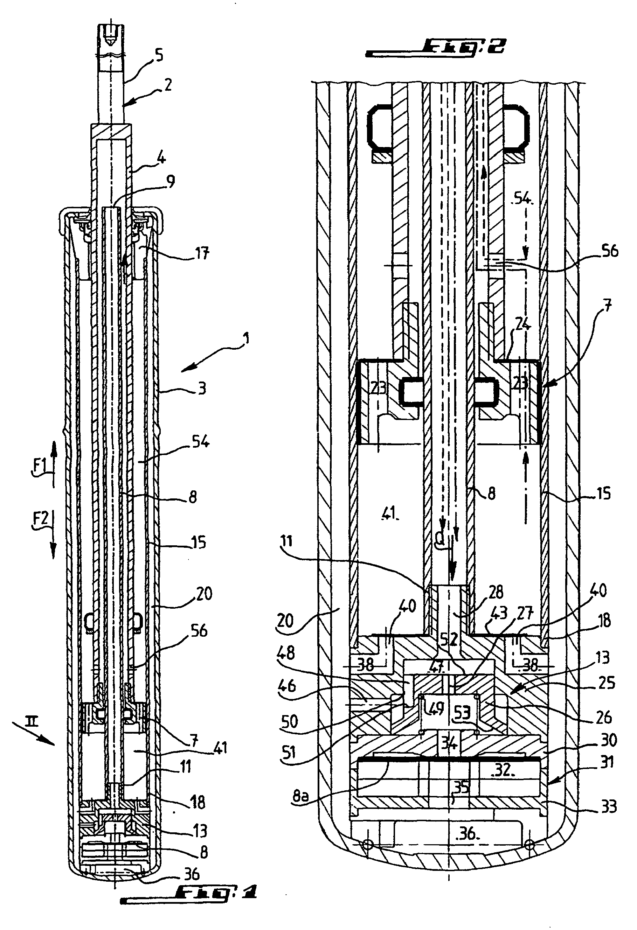

L'agencement d'amortissement 1 selon l'invention, conformément à la figure 1, comporte essentiellement une tige 2 reliée à une masse suspendue (non représentée) telle que la caisse d'un véhicule, et un carter 3 de forme tubulaire, relié à une masse non suspendue (non représentée), telle que la masse des roues et d'une partie de l'essieu dans le cas d'un agencement d'amortissement appliqué à un véhicule automobile. La tige 2 comporte deux parties axialement alignées, à savoir une partie tubulaire inférieure 4 engagée axialement dans le carter tubulaire 3 et une partie extérieure 5 reliée à la masse suspendue. La partie de tige 4 porte à son extrémité inférieure libre un piston annulaire 7 qui coulisse sur la face externe d'un tube central 8 monté coaxialement dans la partie de tige 4 et le carter creux 3. L'extrémité supérieure 9 du tube 8 est ouverte. L'extrémité inférieure 11 du tube 8 est solidaire d'un module de laminage 13.

Le piston 7 coulisse par sa face extérieure cylindrique sur la face intérieure d'un tube 15 qui s'étend coaxialement au carter tubulaire 3 et est solidaire à son extrémité supérieure du bouchon de fermeture 17 du carter 3 et à son extrémité inférieure 18 du module de laminage 13. Ce dernier est disposé dans le fond fermé du carter 3. Le diamètre extérieur du tube 15 est sensiblement égal au diamètre extérieur du module 13 et inférieur au diamètre intérieur du carter 3 de façon à laisser subsister entre le carter et le tube 15 une chambre annulaire 20 constituant une chambre de compensation, comme il sera expliqué plus loin.

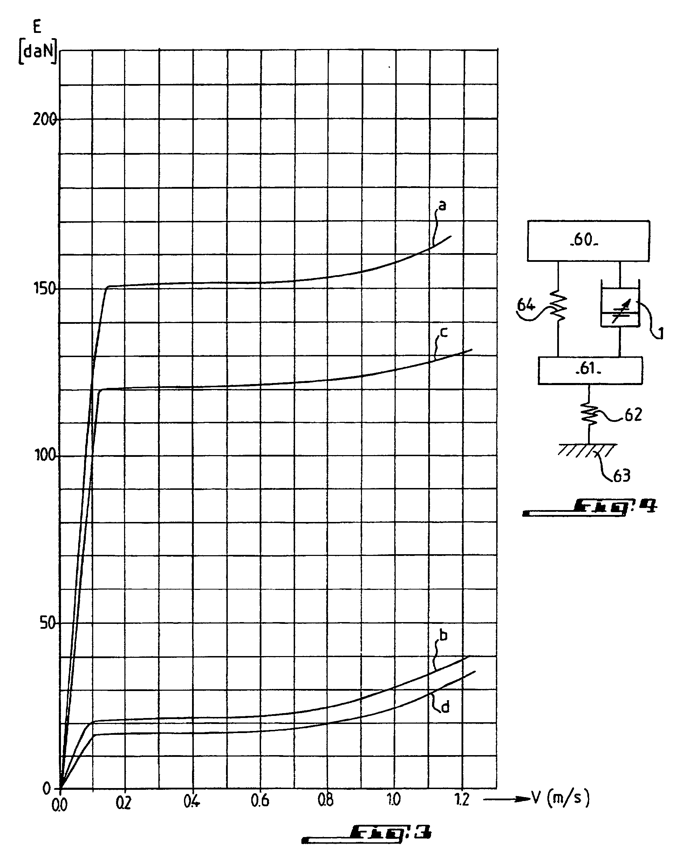

Concernant le piston 7, il comporte un dispositif d'orifices à clapet, à savoir un certain nombre de canaux axiaux 23 (figure 2) répartis angulairement autour de son axe et recouverts par une plaque annulaire 24 qui constitue un clapet d'ouverture et de fermeture des canaux 23.

Le module de laminage 13 comporte essentiellement un corps ayant la forme d'une coupelle 25 dans laquelle coulisse axialement un tiroir 26. Le tiroir et le fond du corps formant coupelle 25 sont percés par des orifices coaxiaux alignés respectivement 27 et 28. Le tube 8 est solidarisé en 11 avec le fond du corps 25, coaxialement à l'orifice 28. La coupelle 25 repose par son extrémité ouverte sur la partie supérieure 30 d'une carcasse 31 d'un électro-aimant annulaire 32. La partie inférieure de la carcasse porte la référence 33. Cette dernière et la partie supérieure 30 sont traversées par des orifices axiaux respectivement 35 et 34 si bien que l'intérieur du tube 8 et l'espace 36 en dessous du module de laminage sont en communication. Un empilement 8a de plaques flexibles, solidarisées ou non, qui forme un diaphragme connu en soi, est interposé entre l'électro-aimant 32 et la face interne adjacente de la partie de carcasse 30. Le fluide qui s'écoule axialement à travers le module 13 est laminé de façon connue en soi.

Le corps formant coupelle 25 comporte un certain nombre de canaux 38 qui sont coudés et s'ouvrent à une extrémité 40 dans la chambre annulaire 41 autour du tube 8 à l'intérieur du tube 15 entre le piston 7 et le module 13 et à l'autre extrémité sur la face périphérique du corps 25 dans la chambre de compensation 20. Un clapet en forme de plaque annulaire 43 recouvre les ouvertures 40, c'est-à-dire repose sur la face frontale supérieure du corps 25. Ce dernier comporte d'autres canaux internes radiaux 46 qui relient la chambre annulaire 20 à la cavité 47 du corps 25 dans laquelle coulisse le tiroir 26. Le tiroir 26 comporte des rainures axiales périphériques 48 qui sont disposées et dont la longueur est dimensionnée de sorte que, lorsque le tiroir est appliqué sur le fond du corps 25, elles ne communiquent pas avec les canaux radiaux 46, mais ouvrent des passages dès que le tiroir s'éloigne de ce fond, entre les arêtes 50 et 51 respectivement du corps et du tiroir.

Il est encore à noter qu'un ressort 49 est interposé entre le tiroir et la partie de carcasse supérieure 30 et que la surface supérieure 52 du tiroir est plus petite que la face résultante inférieure 53 de celui-ci.

On décrira ci-après le fonctionnement de l'agencement d'amortissement selon l'invention tel que décrit ci-dessus et représenté sur les figures 1 et 2.

Lorsque, lors d'une phase de détente, la tige 2 avec son piston-clapet 7 se déplace suivant la flèche F1, c'est-à-dire monte, du fluide hydraulique enfermé dans l'espace annulaire 54 délimité entre la partie de tige creuse 4 et le tube 15 est évacué de cet espace en passant à travers des orifices 56 dans la partie de tige 4, monte dans l'espace annulaire 55 entre le tube central fixe 8 et la partie de tige 4 pour descendre à l'intérieur du tube central 8 jusqu'au module de laminage 13. Dans ce dernier, une partie du fluide s'écoule à travers les canaux latéraux 46 du corps 25 dans la chambre de compensation 20 en étant laminée entre les arêtes 50 et 51, tandis que l'autre partie s'écoule axialement à travers le module 13 à travers l'empilage 8a de plaques flexibles dans la chambre 36 au fond du carter 3, qui communique également avec la chambre de compensation 20. Du fluide passe alors, à travers les canaux 38 en ouvrant le clapet 43, dans la chambre 41 située entre le module de laminage 13 et le piston 7. La voie d'écoulement du fluide au cours de la phase de détente est indiquée par une ligne interrompue fléchée.

Pendant une phase de compression caractérisée par un mouvement de la tige 2 et du piston 7 vers le bas, suivant la flèche F2, du fluide contenu dans la chambre 41 s'écoule, à travers les orifices 23 du piston en ouvrant le clapet 24, dans la chambre 54 et ensuite à travers les orifices 56 et le tube central 8 jusqu'au module de laminage 13, comme cela est indiqué par la ligne fléchée en traits mixtes, et parvient à travers ce module dans la chambre de compensation 20.

On constate qu'aussi bien au cours de la phase de détente qu'au cours de la phase de compression, le fluide hydraulique traverse le module de laminage dans le même sens d'écoulement, ce qui permet d'utiliser pour l'agencement d'amortissement un seul module de laminage 13.

Concernant le fonctionnement du module de laminage 13, l'électro-aimant 32 permet de faire varier, pour un même débit, la pression générée dans l'orifice 27 et la cavité 47. Le tiroir 26 se déplace en fonction de la pression s'exerçant sur les surfaces 52 et 53 et découvre donc, en fonction de ce déplacement, un passage entre les arêtes 50 et 51, ce qui permet le laminage d'une partie du débit du fluide qui ressort alors par l'orifice 46 vers la chambre de compensation 20. La tension ou le courant de commande appliqué à l'électro-aimant 32 permet de faire varier la caractéristique entre la pression dans la cavité 47 en amont du tiroir et le débit de fluide s'écoulant dans le tube central 8 selon la flèche Q. Ceci permet un pilotage de la caractéristique effort-vitesse de l'agencement d'amortissement.

La figure 3 donne les caractéristiques de fonctionnement effort-vitesse de l'agencement de laminage entre un courant i = 0 et un courant i = imax. L'agencement est conçu pour pouvoir fonctionner jusqu'à une fréquence élevée, par exemple de l'ordre de 100 Hz. Un calculateur électronique peut être prévu pour commander de façon continue les courants d'excitation de l'électro-aimant 32 et ainsi procurer un amortissement continûment variable.

Sur la figure 3, les courbes a et b sont relatives aux détentes respectivement maximale et minimale. Les courbes c et d représentent les compressions respectivement maximale et minimale.

La figure 4 illustre, à titre d'exemple, l'utilisation d'un agencement d'amortissement tel que décrit et représenté pour l'amortissement d'une suspension d'un véhicule automobile. Les masses suspendues formées par la caisse du véhicule et les masses non suspendues alors formées par les roues et une partie de l'essieu sont désignées par les références 60 et 61. L'élément 62 symbolise le pneumatique interposé entre la masse 61 et le sol 63. Le système de suspension est composé d'un ressort métallique 64 et de l'agencement d'amortissement 1 selon l'invention dont le piston est situé entre la masse suspendue 60 et la masse non suspendue 61. Le calculateur associé à l'agencement calcule la valeur de l'effort d'amortissement optimal appliqué aux masses 60 et 61 en fonction des informations transmises par les capteurs présents sur le véhicule tels que les capteurs de débattement, de vitesse du véhicule, de la pression des freins etc. Cette valeur est calculée de manière à permettre de filtrer au mieux les efforts transmis à la caisse tout en assurant une force de contact du pneumatique avec le sol maximale pour assurer la tenue de route du véhicule.

Le calcul de la force d'amortissement peut être réalisé suivant une loi CRONE (Commande Robuste d'Ordre Non Entier) selon laquelle l'effort est soit nul, soit proportionnel à une dérivée non entière du déplacement relatif entre la caisse et la roue. Cette loi est décrite dans le brevet français No. 2 660 386.

Bien entendu, l'agencement d'amortissement selon l'invention peut être utilisé dans tout autre système de suspension d'une masse dans lequel un liquide est mis en mouvement et laminé et permet de générer un effort d'amortissement.

## Revendications

1. Agencement d'amortissement des mouvements d'une masse par rapport à un support auquel elle est reliée par l'intermédiaire d'un dispositif de suspension à amortissement hydraulique, comportant un piston au bout d'une tige fixée à ladite masse suspendue et mobile dans un carter fermé solidaire dudit support et un module de laminage du fluide à l'intérieur du carter, qui comporte un dispositif de clapet de laminage d'une partie du fluide hydraulique, et des moyens de laminage prévus dans une voie de dérivation pour le laminage de l'autre partie de ce fluide hydraulique, ledit agencement ne comportant qu'un seul module de laminage (13) dans lequel le sens de l'écoulement du fluide hydraulique est le même pendant les phases de détente et de compression **caractérisé en ce que** le dispositif de clapet comprend un diaphragme à débit variable (8a) ; qui est formé par un empilage de plaques souples, solidarisées ou non, et un électro-aimant (32) de commande du diaphragme.

2. Agencement d'amortissement selon la revendication 1, **caractérisé en ce que** le carter comporte une chambre inférieure (41) délimitée entre le piston (7) et le module de laminage (13) et une chambre supérieure (54) délimitée au-dessus du piston (7), **en ce que** la chambre inférieure (41) est susceptible de communiquer avec la chambre supérieure (54) par l'intermédiaire d'un dispositif de clapet (24) prévu dans le piston (7) de sorte que lors des phases de détente et de compression, le fluide hydraulique s'écoule de la chambre supérieure (54) vers le module de laminage (13).

3. Agencement d'amortissement selon la revendication 2, **caractérisé en ce que** la partie de tige (4) qui porte le piston (7) est creuse, **en ce que** l'espace interne de cette partie de tige (4) communique (en 56) avec la chambre supérieure (54), et **en ce qu'**un tube (8) est disposé coaxialement à l'intérieur de ladite partie de tige (4), ce tube étant ouvert à son extrémité supérieure et ayant son autre extrémité reliée (en 11) à l'entrée (28) du module de laminage (13).

4. Agencement d'amortissement selon la revendication 3, **caractérisé en ce que** l'entrée (28) du module de laminage communique avec une chambre de compensation (20) à laquelle parvient le fluide après avoir été laminé dans le module (13) et **en ce que** la chambre de compensation est en communication avec la chambre inférieure précitée (41) par l'intermédiaire de moyens de clapet (43).

5. Agencement d'amortissement selon la revendication 4, **caractérisé en ce que** le module de laminage (13) comporte une première voie d'écoulement de fluide (27, 34, 35) dans laquelle est disposé le diaphragme de laminage (8a) précité qui est à débit variable, et une voie de dérivation (48, 46), qui débouchent toutes les deux dans la chambre de compensation (20).

6. Agencement d'amortissement selon la revendication 5, **caractérisé en ce que** le module de laminage (13) comporte un tiroir mobile dans un corps (25) sous l'effet d'une pression différentielle de liquide déterminée par le diaphragme précité (8a), la voie de dérivation étant ouverte plus ou moins en fonction du déplacement du tiroir.

7. Agencement d'amortissement selon la revendication 4, **caractérisé en ce que** la communication entre la chambre de compensation (20) et la chambre inférieure (41) du carter est formée par au moins un canal (38) pratiqué dans le corps (25) du module de laminage (13) et dont l'ouverture dans la chambre (41) est susceptible d'être ouverte ou fermée par un clapet (43).

8. Agencement d'amortissement selon l'une des revendications 1 à 7, **caractérisé en ce que** le piston (7) comporte au moins un orifice axial (23) et un clapet disposé sur l'ouverture de l'orifice (23) dans la chambre supérieure (54).

9. Agencement d'amortissement selon l'une des revendications 3 à 8, **caractérisé en ce que** la force d'amortissement produite par le module de laminage (13) est susceptible d'être calculée suivant une loi CRONE, selon laquelle l'effort est soit nul, soit proportionnel à une dérivée non entière du déplacement relatif entre la caisse et la roue d'un véhicule automobile lorsque l'agencement d'amortissement est utilisé pour l'amortissement d'une suspension de véhicule automobile.

## Patentansprüche

1. Vorrichtung zur Dämpfung der Bewegungen einer Masse im Verhältnis zu einem Träger, mit dem sie mittels einer Aufhängevorrichtung mit hydraulischer Dämpfung verbunden ist, umfassend einen Kolben, der am Ende einer an der aufgehängten Masse befestigten Stange angeordnet und in einem fest mit dem Träger verbundenen, geschlossenen Gehäuse beweglich ist, und ein Modul zum Drosseln der Hydraulikflüssigkeit im Inneren des Gehäuses, das eine Ventilvorrichtung zum Drosseln eines Teils der Hydraulikflüssigkeit und in einem Abzweigungskanal vorgesehene Drosselungsmittel zum Drosseln des anderen Teils dieser Hydraulikflüssigkeit umfaßt, wobei die Vorrichtung nur ein einziges Drosselmodul (13) umfaßt, in dem die Fließrichtung der Hydraulikflüssigkeit während der Entspannungs- und der Verdichtungsphase jeweils gleich ist,
**dadurch gekennzeichnet,**
**daß** die Ventilvorrichtung ein Plattenventil mit veränderlicher Durchflußleistung (8a) aufweist, das aus aneinander befestigten oder nicht aneinander befestigten übereinandergestapelten, biegsamen Platten und einem Elektromagneten (32) zur Steuerung des Plattenventils gebildet wird.

2. Dämpfungsvorrichtung nach Anspruch 1, **dadurch gekennzeichnet, daß** das Gehäuse eine von dem Kolben (7) und dem Drosselmodul (13) begrenzte untere Kammer (41) und eine oberhalb des Kolbens (7) abgegrenzte obere Kammer (54) umfaßt und **dadurch**, daß die untere Kammer (41) geeignet ist, mit der oberen Kammer (54) mittels einer im Kolben (7) vorgesehenen Ventilvorrichtung (24) auf solche Weise in Verbindung zu stehen, daß die Hydraulikflüssigkeit in der Entspannungs- und der Verdichtungsphase von der oberen Kammer (54) zum Drosselmodul (13) fließt.

3. Dämpfungsvorrichtung nach Anspruch 2, **dadurch gekennzeichnet, daß** der Teil der Stange (4), der den Kolben (7) trägt, hohl ist, **dadurch**, daß der Innenraum dieses Teils der Stange (4) (bei 56) mit der oberen Kammer (54) in Verbindung steht und **dadurch**, daß ein Rohr (8) koaxial im Inneren des genannten Teils der Stange (4) angeordnet ist, wobei dieses Rohr an seinem oberen Ende offen ist und mit seinem anderen Ende (bei 11) mit dem Einlauf (28) des Drosselmoduls (13) verbunden ist.

4. Dämpfungsvorrichtung nach Anspruch 3, **dadurch gekennzeichnet, daß** der Einlauf (28) des Drosselmoduls mit einer Ausgleichskammer (20) in Verbindung steht, in die die Flüssigkeit nach dem Drosselvorgang im Modul (13) gelangt, und **dadurch**, daß die Ausgleichskammer mittels der Ventilmittel (43) mit der genannten unteren Kammer (41) in Verbindung steht.

5. Dämpfungsvorrichtung nach Anspruch 4, **dadurch gekennzeichnet, daß** das Drosselmodul (13) einen ersten Flüssigkeitsabflußkanal (27, 34, 35) umfaßt, in dem das genannte Drossel-Plattenventil (8a) mit veränderlicher Durchflußleistung und ein Abzweigungskanal (48, 46) vorgesehen sind, die beide in die Ausgleichskammer (20) münden.

6. Dämpfungsvorrichtung nach Anspruch 5, **dadurch gekennzeichnet, daß** das Drosselmodul (13) einen Schieber umfaßt, der unter der Wirkung eines mittels des genannten Plattenventils (8a) bestimmten Flüssigkeitsdifferentialdrucks in einem Hauptteil (25) beweglich ist, wobei der Abzweigungskanal in Abhängigkeit von der Verschiebung des Schiebers mehr oder weniger geöffnet ist.

7. Dämpfungsvorrichtung nach Anspruch 4, **dadurch gekennzeichnet, daß** die Verbindung zwischen der Ausgleichskammer (20) und der unteren Kammer (41) des Gehäuses durch mindestens einen im Hauptteil (25) des Drosselmoduls (13) ausgeführten Kanal (38) gebildet wird, dessen Öffnung zur Kammer (41) hin geeignet ist, durch ein Ventil (43) geöffnet oder geschlossen zu werden.

8. Dämpfungsvorrichtung nach einem der Ansprüche 1 bis 7, **dadurch gekennzeichnet, daß** der Kolben (7) zumindest eine axiale Öffnung (23) und ein am Austritt der Öffnung (23) in der oberen Kammer (54) angeordnetes Ventil umfaßt.

9. Dämpfungsvorrichtung nach einem der Ansprüche 3 bis 8, **dadurch gekennzeichnet, daß** die durch das Drosselmodul (13) erzeugte Dämpfungskraft geeignet ist, nach dem CRONE-Gesetz berechnet zu werden, gemäß dem die Kraft entweder null oder proportional zu einer nicht vollständigen Ableitung der relativen Bewegung zwischen der Karosserie und dem Rad eines Kraftfahrzeugs ist, wenn die Dämpfungsvorrichtung zur Dämpfung des Fahrwerks eines Kraftfahrzeugs verwendet wird.

## Claims

1. Damping device for the movement of a mass in respect to a support, to which it is connected by means of a hydraulic damping suspension device, comprising a piston at the end of a rod fixed to this mass, which is suspended and mobile in a closed case, which is integral with this support, and a fluid flow reducing module inside the case, which comprises a valve device for reducing the flow of a part of the hydraulic fluid and the flow reducing means provided in a diversion line for reducing the flow of the other part of this hydraulic fluid, this device comprising only a single flow reducing module (13), in which the direction of the flow of the hydraulic fluid is the same during the expansion and the compression phases, **characterised in that** the valve device comprises a variable flow diaphragm (8a), which is formed by a stack of flexible discs, whether interlocked or not, and an electromagnet (32) for controlling the diaphragm.

2. Damping device according to claim 1, **characterised in that** the case comprises a lower chamber (41) delimited between the piston (7) and the flow reducing module (13) and an upper chamber (54) delimited above the piston (7), in which the lower chamber (41) is able to communicate with the upper chamber (54) by means of a valve device (24) provided in the piston (7) so that during the expansion and compression phases the hydraulic fluid flows from the upper chamber (54) to the flow reducing module (13).

3. Damping device according to claim 2, **characterised in that** the part of the rod (4) which carries the piston (7) is hollow, the internal space of this part of the rod (4) communicates (in 56) with the upper chamber (54) and a tube (8) is arranged coaxially inside this part of the rod (4), this tube being open at the top end and connected (in 11) to the inlet (28) of the flow reducing module (13) at the other end.

4. Damping device according to claim 3, **characterised in that** the inlet (28) of the flow reducing module communicates with a compensation chamber (20) which the fluid reaches after the flow has been reduced in the module (13) and the compensation chamber is in communication with the lower chamber indicated above (41) by means of a valve (43).

5. Damping device according to claim 4, **characterised in that** the flow reducing module (13) comprises a first fluid flow line (27, 34, 35), in which the flow reducing diaphragm (8a) indicated above is arranged, which has a variable flow, and a diversion line (48, 46), which both come out in the compensation chamber (20).

6. Damping device according to claim 5, **characterised in that** the flow reducing module (13) has a mobile slide in a body (25) subject to the effect of a differential pressure of the liquid determined by the diaphragm indicated above (8a), the diversion line being more or less open according to the movement of the slide.

7. Damping device according to claim 4, **characterised in that** the communication between the compensation chamber (20) and the lower chamber (41) of the case is made by at least one channel (38) made in the body (25) of the flow reducing module (13), the opening of which in the chamber (41) may be opened or closed by a valve (43).

8. Damping device according to one of claims 1 to 7, **characterised in that** the piston (7) has at least one axial orifice (23) and a valve arranged on the opening of the orifice (23) in the upper chamber (54).

9. Damping device according to one of claims 3 to 8, **characterised in that** the damping force produced by the flow reducing module (13) may be calculated according to a CRONE law, according to which the force is either nil or proportional to a not entire derivative of the relative movement between the body and the wheel of a motor vehicle when the damping device is used to damp a motor vehicle suspension.
